# EUROPEAN PATENT SPECIFICATION

(11) **EP 3 476 893 B1**
(45) Date of publication and mention of the grant of the patent: **18.12.2019**
(21) Application number: 18201693.1
(22) Date of filing: 22.10.2018
(51) Int. Cl.: C08L 21/00, C08K 9/10, B60C 1/00, C08K 5/44, C08L 7/00, C08L 9/00, C08K 3/06

(54) **RUBBER COMPOUND FOR TYRE PORTIONS**
CAOUTCHOUC ZUSAMMENSETZUNG FÜR REIFENTEILEN
COMPOSITION DE CAOUTCHOUC POUR PARTIES DE PNEUS

(30) Priority: 27.10.2017 IT 201700122730
(43) Date of publication of application: 01.05.2019
(73) Proprietor: Bridgestone Corporation, Chuo-Ku Tokyo 104-8340 (JP)
(72) Inventor: Straffi, Paolo, 00128 Roma (IT); AGORETTI, Pasquale, 00128 Roma (IT); HOUSE, JOHN NAZARENO, 00128 Roma (IT); D'ALFONSO, Claudio, 00128 Roma (IT); Nanni, Francesca, 00133 Roma (IT); Mori, Stefano, 00133 Roma (IT); Cherubini, Valeria, 00133 Roma (IT)
(74) Representative: Marchetti, Alessio

(56) References cited:
- US-A- 3 179 637
- US-A- 4 102 800
- US-A1- 2003 165 682
- US-A1- 2006 127 668
- DATABASE WPI Week 198607 Thomson Scientific, London, GB; AN 1986-045028 XP002780671, -& JP S60 262838 A (KUREHA CHEM IND CO LTD) 26 December 1985 (1985-12-26)
- DATABASE WPI Week 199819 Thomson Scientific, London, GB; AN 1998-210128 XP002780672, -& JP H10 17706 A (BRIDGESTONE CORP) 20 January 1998 (1998-01-20)
- DATABASE WPI Week 197412 Thomson Scientific, London, GB; AN 1974-21575V XP002780673, -& JP S48 25042 A (JAPAN SYNTHETIC RUBBER CO LTD) 2 April 1973 (1973-04-02)

## Description

The present invention is related to a rubber compound for the preparation of portions of pneumatic tyres.

Generally, rubber compounds are prepared by means of a plurality of mixing steps in order to ensure the correct dispersion of the various types of ingredients of which it is composed. As is known to a person skilled in the art, the effectiveness of an ingredient is necessarily conditioned by the homogeneous dispersion thereof within the rubber compound.

Here and hereinafter the term "non-productive mixing step" refers to a mixing step wherein, to the cross-linkable unsaturated chain polymer base are added and mixed the ingredients of the compound with the exception of the vulcanization system; while the term "productive mixing step" refers to a mixing step wherein the vulcanization system is added to and mixed into the compound being prepared.

The term vulcanization system refers to a complex of ingredients comprising at least sulfur and accelerating compounds, which in the preparation of the compound are added in a final mixing step and have the purpose of promoting the vulcanization of the polymer base once the compound is subjected to a vulcanization temperature.

The need to mix the vulcanization system exclusively during a separate mixing step (productive mixing step) subsequent to the other steps, derives from the fact that during the non-productive mixing steps the compound temperature reaches values such as to trigger vulcanization, thus compromising the entire compound preparation process. Thus, in order to avoid premature vulcanization of the compound, the vulcanization system is added during a final mixing step (productive mixing step), wherein the temperature is kept as low as possible, thereby avoiding that which would trigger the vulcanization reaction.

Furthermore, during the productive mixing step it must be ensured that the vulcanization system is dispersed as evenly as possible in order to thus ensure the correct structural functionality of the derived pneumatic tyre portion. In this respect, it should be noted that controlling the temperature during the productive mixing step necessarily involves high compound viscosity, which constitutes an obstacle to the proper dispersion of the vulcanization system. Under these conditions, a correct dispersion of the vulcanization system can only be ensured by prolonging the mixing period, with the obvious disadvantages in terms of productivity that this would entail.

From that which has been described above, it is clear that the current preparation procedure for compounds involves critical issues regarding the dispersion of the vulcanization system within compounds, together with productivity issues. In fact, the vulcanization system must be added during a final and separate mixing step (productive mixing step) which, due to high viscosity, must continue for the period of time necessary in order to ensure, in any case, a correct dispersion of the same vulcanization system.

The inventors of the present invention have found a solution, wherein the technical characteristics thereof are such as to ensure the proper dispersion of the vulcanization system within the compound, without for this reason compromising the productivity of the entire process due to elevated mixing durations.

The object of the present invention is a rubber compound for the preparation of parts of pneumatic tyres; said rubber compound comprising at least one cross-linkable unsaturated chain polymer base, one reinforcing filler and one vulcanization system comprising at least sulfur and vulcanization accelerating agents; said rubber compound being characterized in that it comprises microcapsules made from a thermoplastic material having a melting temperature between 120 and 180°C and an average diameter of less than 1 µm; said microcapsules comprising therewithin the entirety of said vulcanization accelerating agents.

The melting temperature given above is considered to be at atmospheric pressure.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Preferably, said thermoplastic material is polylactic acid.

Preferably, said rubber compound comprises from 0.5 to 10 phr of said microcapsules.

Preferably, said vulcanization accelerating agents comprise TBBS (N-tert-butyl benzothiazole-2-sulfenamide).

Preferably, said microcapsules are added to the compound being prepared during the non-productive mixing step.

A further object of the present invention is a pneumatic tyre portion manufactured using the rubber compound of the present invention.

A still further object of the present invention is a pneumatic tyre comprising a portion manufactured with the rubber compound described above.

For a better understanding of the invention, the following are given as purely illustrative and non-limiting examples.

### EXAMPLES

Four compounds were prepared (A - D) the first three thereof (A - C) representing comparison compounds, whilst the fourth (D) represents the compound according to the present invention.

In particular, the comparison compound A represents a conventional rubber compound wherein the vulcanization system, comprising sulfur and an accelerating agent, is added during the productive mixing step.

The comparison compound B provides the presence of microcapsules having an average diameter greater than 1 µm.

The comparison compound C provides the presence of microcapsules made from a polymeric material having a melting temperature greater than 180°C.

Finally, the compound D is prepared according to the dictates of the invention and, therefore, provides the use of microcapsules made of a thermoplastic material having a melting point of between 120 and 180°C and with an average diameter of less than 1 µm.

The compounds of the examples were prepared according to a standard procedure, which is not relevant to the purposes of the present invention.

### - preparation of the compounds -

### (non-productive mixing step)

Before the start of the mixing, a mixer with tangential rotors and an internal volume of between 230 and 270 liters was loaded with the polymer base, the carbon black the stearic acid, the zinc oxide and, only for compounds B - D, the microcapsules comprising the vulcanization accelerating agents reaching a fill factor of 66-72%.

The mixer was operated at a speed of 40-60 revolutions/minute, and the mixture thus formed was discharged once a temperature of 140-160°C had been reached.

### (productive mixing step)

The sulfur and, only in the case of compound A, the vulcanization accelerating agents were added to the mixture obtained from the previous step, reaching a filling factor of 63-67%.

The mixer was operated at a speed of 20-40 revolutions/minute, and the mixture thus formed was discharged once a temperature of 100-110°C had been reached.

Table I lists the compositions of compounds in phr indicating the mixing step wherein the various ingredients were added.

**TABLE I**

| Compounds | A | B | C | D |
|---|---|---|---|---|
| 1^{a} non-productive mixing step | | | | |
| NR | 70.0 | | | |
| BR | 30.0 | | | |
| Carbon black | 5.0 | | | |
| Stearic acid | 1.5 | | | |
| Zinc oxide | 1.5 | | | |
| Microcapsules (a) | -- | 2.0 | -- | -- |
| Microcapsules (b) | -- | -- | 2.0 | -- |
| Microcapsules (c) | -- | -- | -- | 2.0 |

| Productive mixing step | | | | |
|---|---|---|---|---|
| Sulfur | 1.2 | 1.2 | 1.2 | 1.2 |
| Vulcanization accelerator agent | 1.0 | -- | -- | -- |

NR is a 1,4-cis-polyisoprene rubber of natural origin.

BR is a butadiene rubber with a 1,4-cis content of at least 40%.

The vulcanization accelerating agent used is TBBS (N-tert-butyl-2-benzothiazyl sulfenamide).

Microcapsules (a) indicates the microcapsules having an average diameter of 3 µm, made from polylactic acid (PLA) and including the entire amount of vulcanizing accelerating agent indicated within the compound A.

Microcapsules (b) indicates the microcapsules having an average diameter of 0.8 µM made from polyvinyl alcohol (PVA) and comprising the entire amount of the vulcanization accelerating agent indicated within the compound A.

Microcapsules (c) indicates the microcapsules having an average diameter of 0.8 µM made from polylactic acid (PLA) and comprising the entire amount of the vulcanization accelerating agent indicated within the compound A.

The procedure used for the preparation of the microcapsules of compounds B - D is given below by way of an example.

The microcapsules can be obtained by means of various techniques, well known in the literature. The technique used for the present invention is that by emulsion. The microspheres were obtained by the dripping of the dispersed phase in the continuous phase. The size of the microspheres can be controlled according to the speed of agitation, the temperature of the solution, the type of surfactant and the pair of solvents of the dispersed and continuous phases.

In the specific case, the dispersed phase was PLA dissolved in a solvent (e.g. dichloromethane) while the continuous phase was a surfactant (e.g. sodium lauryl sulphate) dissolved in water. The emulsion was placed under fast agitation (1500 rpm for 30 minutes) at 30°C, by means of which the formation was obtained of PLA microspheres for subsequent filtration and drying.

The compounds listed in Table II were subjected to tests in order to evaluate the mechanical properties thereof. Indeed, as is well known to a person skilled in the art, the mechanical properties are closely related to the vulcanization process and, therefore, to the state of dispersion of the vulcanization system as a whole.

The mechanical properties were measured in accordance with the ASTM D412C standard.

In particular, the properties in relation to the M300 module were measured, TB (tension at break); EB (elongation at break).

Table III shows the results related to the mechanical properties for the examples described above.

For more immediate evidence of the benefits relating to the compound of the present invention, the values obtained from the tests were listed in Table II in indexed form against the results obtained from the comparison compound A.

**TABLE II**

| | A | B | C | D |
|---|---|---|---|---|
| M300 | 100 | 95 | -- | 105 |
| TB | 100 | 93 | -- | 107 |
| EB | 100 | 103 | -- | 105 |

The values related to compound C have not been listed insofar as this compound has not vulcanized because the PVA has a too high melting temperature and the vulcanizing accelerating agent remained inside the microcapsule without, thus, being able to carry out the vulcanization process.

From a comparison of the values reported in Table II it can be deduced that the compound obtained according to the present invention (Compound D), presenting the best mechanical characteristics, has a more homogeneous dispersion of the vulcanization accelerating agents. Indeed, as is well known to a person skilled in the art, where all other conditions are equal, a compound with a more evenly distributed vulcanization system demonstrates better mechanical properties.

In particular, from a comparison between the values in relation to compound A and the values in relation to compound D, it is immediately evident how the possibility to already add, during the first non-productive mixing step, the vulcanization accelerating agents, necessarily ensures better dispersion of the same and, consequently, a more effective vulcanization; whilst, from a comparison between the values in relation to compound B and the values in relation to compound D, it is immediately evident how the dimensions of the microcapsules of the present invention have a significant role in the dispersion thereof within the compound.

Finally, it is to be considered that the present invention also offers the possibility of adding sulfur directly during the first non-productive mixing step, with the obvious advantages in terms of productivity that this entails.

## Claims

1. Rubber compound for the preparation of parts of pneumatic tyres; said rubber compound comprising at least one cross-linkable unsaturated chain polymer base, one reinforcing filler and one vulcanization system comprising at least sulfur and vulcanization accelerating agents; said rubber compound being **characterized in that** it comprises microcapsules made from a thermoplastic material having a melting temperature between 120 and 180°C and an average diameter of less than 1 µm; said microcapsules comprising the entirety of said vulcanization accelerating agents.

2. Rubber compound according to claim 1, **characterized in that** said thermoplastic material is included in the group consisting of polylactic acid. Polyethylene, Polypropylene, Polyoxymethylene, Polyurethane.

3. Rubber compound according to claim 1 or 2, **characterized in that** it comprises from 0.5 to 10 phr of said microcapsules.

4. Rubber compound according to one of the preceding claims, **characterized in that** said vulcanization accelerating agents comprise TBBS (N-tert-butyl benzothiazole-2-sulfenamide).

5. Rubber compound according to one of the preceding claims, **characterized in that** said microcapsules are added to the compound being prepared during a non-productive mixing step.

6. Portion of a pneumatic tyre manufactured using the compound according to one of the preceding claims.

7. Pneumatic tyre comprising a portion according to claim 6.

## Patentansprüche

1. Kautschukverbindung zur Herstellung von Teilen von Luftreifen; wobei die Kautschukverbindung mindestens eine vernetzbare, ungesättigte Kettenpolymerbasis umfasst, einen verstärkenden Füllstoff und ein Vulkanisierungssystem, umfassend mindestens Schwefel und vulkanisierungsbeschleunigende Mittel; wobei die Kautschukverbindung **dadurch gekennzeichnet ist, dass** sie Mikrokapseln umfasst, die aus einem thermoplastischen Material hergestellt sind, aufweisend eine Schmelztemperatur von zwischen 120 und 180 °C und einen durchschnittlichen Durchmesser von weniger als 1 µm; wobei die Mikrokapseln die Gesamtheit der vulkanisierungsbeschleunigenden Mittel umfassen.

2. Kautschukverbindung nach Anspruch 1, **dadurch gekennzeichnet, dass** das thermoplastische Material eingeschlossen ist in der Gruppe bestehend aus Polymilchsäure. Polyethylen, Polypropylen, Polyoxymethylen, Polyurethan.

3. Kautschukverbindung nach Anspruch 1 oder 2, **dadurch gekennzeichnet, dass** sie von 0,5 bis 10 phr Mikrokapseln umfasst.

4. Kautschukverbindung nach einem der vorstehenden Ansprüche, **dadurch gekennzeichnet, dass** die vulkanisierungsbeschleunigenden Mittel TBBS (N-Tert-butylbenzothiazol-2-sulfenamid) umfassen.

5. Kautschukverbindung nach einem der vorstehenden Ansprüche, **dadurch gekennzeichnet, dass** die Mikrokapseln zu der Verbindung zugegeben werden, die während eines nicht produktiven Mischschritts hergestellt wird.

6. Abschnitt eines Luftreifens, der unter Verwendung der Verbindung nach einem der vorstehenden Ansprüche gefertigt ist.

7. Luftreifen, umfassend einen Abschnitt nach Anspruch 6.

## Revendications

1. Composé de caoutchouc pour la préparation de parties de pneumatiques ; ledit composé de caoutchouc comprenant au moins une base polymère réticulable à chaîne insaturée, une charge renforçante et un système de vulcanisation comprenant au moins du soufre et des agents accélérateurs de vulcanisation ; ledit composé de caoutchouc étant **caractérisé en ce qu'**il comprend des microcapsules fabriquées à partir d'un matériau thermoplastique ayant une température de fusion entre 120 et 180 °C et un diamètre moyen inférieur à 1 µm ; lesdites microcapsules comprenant la totalité desdits agents accélérateurs de vulcanisation.

2. Composé de caoutchouc selon la revendication 1, **caractérisé en ce que** ledit matériau thermoplastique est inclus dans le groupe constitué d'acide polylactique. Polyéthylène, Polypropylène, Polyoxyméthylène, Polyuréthane.

3. Composé de caoutchouc selon la revendication 1 ou 2, **caractérisé en ce qu'**il comprend de 0,5 à 10 pcc desdites microcapsules.

4. Composé de caoutchouc selon l'une des revendications précédentes, **caractérisé en ce que** lesdits agents accélérateurs de vulcanisation comprennent du TBBS (N-tert-butyl benzothiazole-2-sulfénamide).

5. Composé de caoutchouc selon l'une des revendications précédentes, **caractérisé en ce que** lesdites microcapsules sont ajoutées au composé en cours de préparation pendant une étape de mélange non productive.

6. Portion d'un pneumatique fabriquée en utilisant le composé selon l'une des revendications précédentes.

7. Pneumatique comprenant une portion selon la revendication 6.
